# EUROPEAN PATENT APPLICATION

(11) **EP 4 520 655 A2**
(43) Date of publication of application: **12.03.2025**
(21) Application number: 25153227.1
(22) Date of filing: 31.07.2023
(51) Int. Cl.: B64C 1/18

(54) **AIRCRAFT FLOOR ARRANGEMENT WITH CUSTOMIZABLE LOAD-BEARING CAPABILITIES**

(62) Divisional of application: 23188739.9
(71) Applicant: AIRBUS Operations GmbH, 21129 Hamburg (DE)
(72) Inventor: BENTHIEN, Hermann, 21129 Hamburg (DE); SCHWING, Bernd, 21129 Hamburg (DE)
(74) Representative: LKGLOBAL Lorenz & Kopf Patentanwalt Attorney at Law PartG mbB

(57) **Abstract**

The present invention relates to floor constructions in aircrafts. In order to provide a facilitated adaptability of floor designs regarding their load-bearing capabilities, an aircraft floor arrangement (10) with customizable load-bearing capabilities is provided that comprises a plurality of floor panels (12) and at least one support profile (14). The at least one support profile is configured to reinforce at least one of the floor panels such that the load-bearing capabilities are increased. The floor panels are provided with a plurality of interface points (16) arranged at least along one direction. The interface points are configured for mounting of one of the support profiles to one of the floor panels via the interface points to reinforce the floor panels.

## Description

The present invention relates to floor constructions in aircrafts, and relates in particular to an aircraft floor arrangement with customizable load-bearing capabilities, to a floor system for an aircraft, to an aircraft and to a method for customizing load-bearing capabilities of an aircraft floor arrangement.

### BACKGROUND OF THE INVENTION

Aircrafts are commonly having a floor within a fuselage. An example is a cabin floor to separate a cabin area from a cargo area, usually provided below. A further example is a floor in the cargo area. Another example is a floor in a cockpit area. The floor may have floor panels arranged on a floor support construction, which is mounted to structural parts of the fuselage. Due to different use scenarios, for example within the cabin area, different requirements may be given for the floor leading to the application of different floor panels. However, it has been shown that changes within the floor panels may trigger a cumbersome redesign and official admission procedure, in particular when retrofitting an aircraft.

### SUMMARY OF THE INVENTION

There may thus be a need to provide a facilitated adaptability of floor designs regarding their load-bearing capabilities.

The object of the present invention is solved by the subject-matter of the independent claims; further embodiments are incorporated in the dependent claims. It should be noted that the following described aspects of the invention apply also for the aircraft floor arrangement with customizable load-bearing capabilities, for the floor system for an aircraft, for the aircraft and for the method for customizing load-bearing capabilities of an aircraft floor arrangement.

According to the present invention, an aircraft floor arrangement with customizable load-bearing capabilities is provided. The floor arrangement comprises a plurality of floor panels and at least one support profile. The at least one support profile is configured to reinforce at least one of the floor panels such that the load-bearing capabilities are increased. The floor panels are provided with a plurality of interface points arranged at least along one direction. The interface points are configured for mounting of one of the support profiles to one of the floor panels via the interface points to reinforce the floor panels.

As an effect, the floor panel can be reinforced where needed, e.g. locally, without the need for further redesigning, since the panels are not modified by the attachment of the support profile due to providing the multiple interface points.

According to an example, the interface points are provided in a grid pattern.

According to an example, a plurality of different support profiles is provided forming a reinforcement kit, the support profiles being provided as at least one of the group of:
i) lower reinforcement in different lengths and heights;
ii) upper reinforcement in different lengths and widths; and
iii) lateral reinforcement in different lengths and with different upper flange and web portions.

According to an example, the support profile is provided as an integratable profile comprising horizontal flange portions for mounting adjacent floor panels and vertical web members providing additional load support.

According to an example, in first option, the support profile comprises an upper flange segment configured to provide a local trolley support. In a second option, the support profile comprises an upper segment configured to provide a galley wall support.

In an example, both options of the trolley and the galley wall support are provided in a combined manner.

According to an example, the floor panels of the plurality of floor panels are provided as sandwich panels comprising a top layer and a bottom layer spaced apart by a center layer. The center layer comprises a sheet-like structure alternately fixed to the top layer and the bottom layer by a plurality of fixation points. At least a part of the fixation points are provided as the interface points.

According to an example, the sheet-like structure is provided as at least one of the group comprising: a corrugated sheet, a folded sheet, a trapezoidal sheet, a troughed sheet and a profiled sheet.

In an option, a floor system for an aircraft is provided. The floor system comprises an aircraft floor arrangement according to one of the preceding examples and a support arrangement comprising a plurality of floor supports. The plurality of floor panels is carried by the floor supports.

According to an example, the floor supports comprise longitudinal support profiles for resting the floor panels on the support profiles.

According to an option, the longitudinal support profiles are provided as seat rails resting on transverse cross beams. The panels are resting on the seat rails.

According to the present invention, also an aircraft is provided. The aircraft comprises a fuselage, a wing arrangement attached to the fuselage, and a propulsion arrangement attached to at least one of the group of the fuselage and the wing arrangement. A floor is provided in the fuselage, e.g. for a cabin or cargo area. The floor comprises at least one aircraft floor arrangement according to one of the examples above or a floor system for an aircraft cabin according to one of the examples above.

In an option, the floor comprises a floor system for an aircraft cabin according to one of the examples above.

According to the present invention, also a method for customizing load-bearing capabilities of an aircraft floor arrangement is provided. The method comprises the following steps:
- providing a plurality of floor panels provided with a plurality of interface points arranged at least along one direction;
- providing at least one support profile configured to reinforce at least one of the floor panels such that the load-bearing capabilities are increased; and
- mounting of one of the support profiles to one of the floor panels via the interface points to reinforce the floor panels.

According to an aspect, floor panels of a floor arrangement are provided with a plurality of interface points. These points can be used to attach a support profile for local increase of the load-bearing capability of the panel. This allows to assign the floor panels to the primary structure of the aircraft. In case modifications are provided, such as changes in the cabin or cargo layout, and due to the modification increased loads are expected that need to be taken care of, the customizable local reinforcement provides proper changes, but without actually changing the primary structure. Hence, reinforcement is made possible.

According to an aspect, the floor panels are preconfigured for possible attachment of a support profile in case reinforcement is needed. For this purpose, a plurality of possible attachment points is provided as interfaces. A support profile can then be attached to the floor panel without any actually changes of the floor panel. This allows changes even after approval of the floor design as part of the primary structure of the aircraft. The floor arrangement can thus be changed in a reinforcement sense regarding the load-bearing capabilities.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of an aircraft floor arrangement with customizable load-bearing capabilities.
Fig. 2 schematically shows an example of a floor system for an aircraft.
Fig. 3 shows a cross-section of an example of an aircraft.
Fig. 4 shows basic steps of an example of a method for customizing load-bearing capabilities of an aircraft floor arrangement.
Fig. 5 shows a cross section of an example of a floor panel with an attached support profile.
Fig. 6 shows the example of Fig. 5 in a larger view in the context of a trolley and a galley wall segment.
Fig. 7 shows the example of Fig. 6 with a mount to a cross beam.
Fig. 8 shows the example pf Fig. 7 in a transverse cross-section.
Fig. 9 schematically shows an example of a workflow for mounting the floor panel and the support profile.
Fig. 10 schematically shows another example of a workflow for mounting the floor panel and the support profile.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

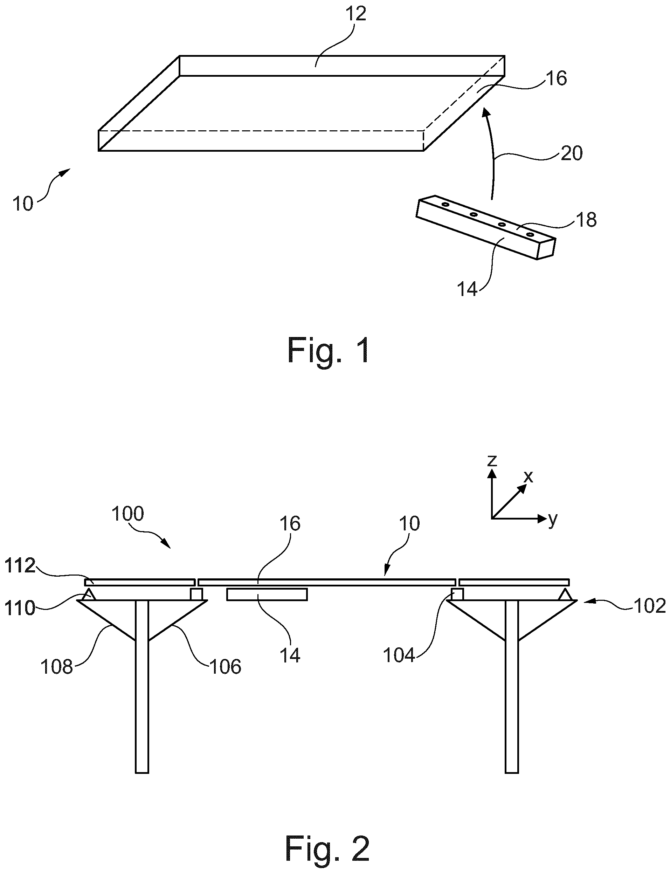

Fig. 1 schematically shows an example of an aircraft floor arrangement 10 with customizable load-bearing capabilities. The aircraft floor arrangement 10 comprises a plurality of floor panels 12 and at least one support profile 14. The at least one support profile 14 is configured to reinforce at least one of the floor panels 12 such that the load-bearing capabilities are increased. The floor panels 12 are provided with a plurality of interface points 16 arranged at least along one direction. The interface points 16 are configured for mounting of one of the support profiles 14 to one of the floor panels 12 via the interface points 16 to reinforce the floor panels 12.

The at least one support profile 14 is shown with a plurality of interface connection points 18, e.g. complementary to the interface points 16. The interface connection points 18 are provided matching with a pattern or pitch of the interface points 16 of the floor panel 12 at least in that some are at matching locations to allow mounting the support profile 14 to the floor panels 12.

In an example, the same pattern is provided for the plurality of interface connection points 18 as for the interface points 16. In another example, a multiple of the pattern is provided for the plurality of interface connection points 18 as for the interface points 16, or vice versa. For example, the interface connection points 18 in a pitch two times of the pitch of the interface points 16, or three or more times the pitch, i.e. the repetitive distance between the points.

An arrow 20 indicates the option of mounting the support profile 14 to the floor panel 12.

The interface points 16 can also be referred to as interface location, interfaces, connection points, connection location, connector, mounting point or connecting interface.

The interface points 16 are provided as connecting interfaces for additional mounting to the floor panel.

In one option, the aircraft floor arrangement 10 is a cabin floor arrangement for a cabin area of an aircraft. In another option, the aircraft floor arrangement 10 is a cargo floor arrangement for a cargo area of an aircraft.

The term "along one direction" relates to a linear direction of the interface connection points 18.

In an example, the interface points are provided in a linear pattern, i.e. a one-dimensional pattern.

In another example, the interface points are provided in a plane pattern, i.e. a two-dimensional pattern. For example, a grid-like pattern is provided, e.g. with different or same pitches in two or more different directions.

Due to the customization, the load-bearing capabilities can be adapted.

The support profiles 14 can be provided aligned to a longitudinal direction of the aircraft, i.e. in X-direction. The support profiles 14 can also be provided aligned to a direction transverse to the longitudinal direction of the aircraft, i.e. in Y-direction.

As an option, it is provided that the interface points 16 are provided in a grid pattern.

In an example, the interface points 16 are provided as holes. In another example, the interface points 16 are provided as blind bushings or blind sockets.

As another option, it is provided that the support profile 14 is configured for reinforcing the floor panel 12 on at least one of the group of: i) below, ii) above; and iii) lateral.

As a further option, it is provided that a plurality of different support profiles 14 is provided forming a reinforcement kit, the support profiles 14 being provided as at least one of the group of:
i) lower reinforcement in different lengths and heights;
ii) upper reinforcement in different lengths and widths; and
iii) lateral reinforcement in different lengths and with different upper flange and web portions.

Fig. 2 schematically shows an example of a floor system 100 for an aircraft. The floor system 100 comprises an example of the aircraft floor arrangement 10 according to one of the examples above. The floor system 100 further comprises a support arrangement 102 with a plurality of floor supports 104. The plurality of floor panels 12 of the aircraft floor arrangement 10 are carried by the floor supports 104.

The floor panels 12 and the floor supports 104 are provided as part of the primary structure of the aircraft, i.e. the structure that is considered essential for the aircraft and that must not be changed or altered during use of the aircraft. The support profile/s 14 is/are not part of the primary structure and can be changed, e.g. installed, demounted or the like.

As an example, the support arrangement 102 comprises a triangular cantilevering center console 106 attached to vertical floor supports 107 facing towards a center field and a further triangular cantilevering lateral console 108 facing towards a lateral side. The center consoles 106 provide the floor supports 104, and the lateral consoles 108 provide further supports 110 for lateral floor panels 112.

A coordinate system is shown in Fig. 2 and the following figures, with an X-axis indicating the longitudinal direction of an aircraft, with a Y-axis indicating the horizontal direction transverse to the longitudinal direction of the aircraft and a Z-axis indicating the vertical direction transverse to the longitudinal direction and transvers to the horizontal transverse direction of the aircraft.

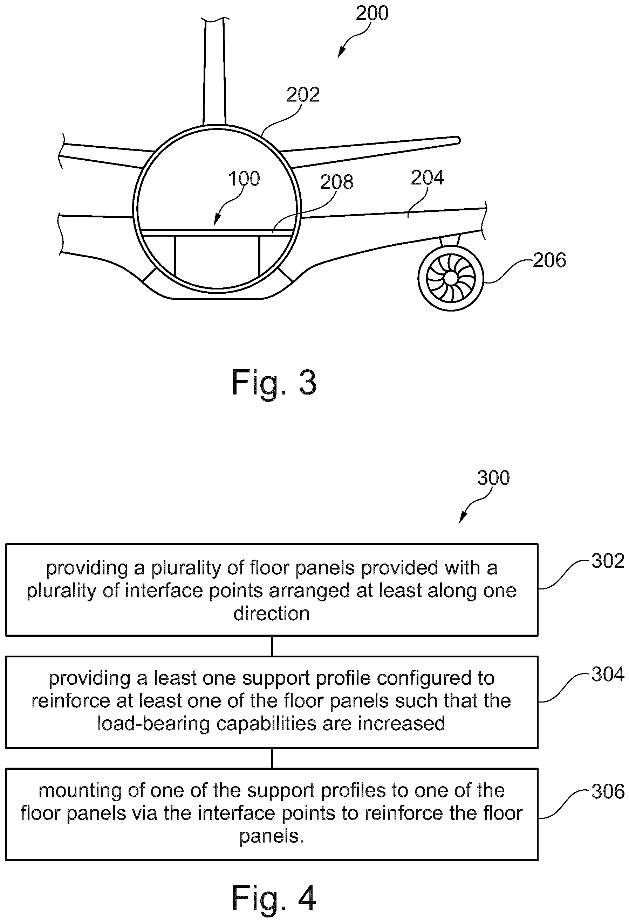

Fig. 3 shows an example of an aircraft 200 in a cross-section. The aircraft 200 comprises a fuselage 202, a wing arrangement 204 attached to the fuselage 202, and a propulsion arrangement 206 attached to at least one of the group of the fuselage 202 and the wing arrangement 204. A floor 208 is provided in the fuselage 202 for a cabin or cargo area. The floor 208 comprises at least one example of the aircraft floor arrangement 10 according to one of the examples above and below, and an example of the floor system 100 for an aircraft cabin according to one of the examples above.

It is noted that the support profile 14 is schematically shown.

Fig. 4 shows basic steps of an example of a method 300 for customizing load-bearing capabilities of an aircraft floor arrangement. The method 300 comprises the following steps:
- In a first step 302, it is provided a plurality of floor panels having a plurality of interface points arranged at least along one direction.
- In a second step 304, at least one support profile is provided configured to reinforce at least one of the floor panels such that the load-bearing capabilities are increased.
- In a third step 306, one of the support profiles is mounted to one of the floor panels via the interface points to reinforce the floor panels.

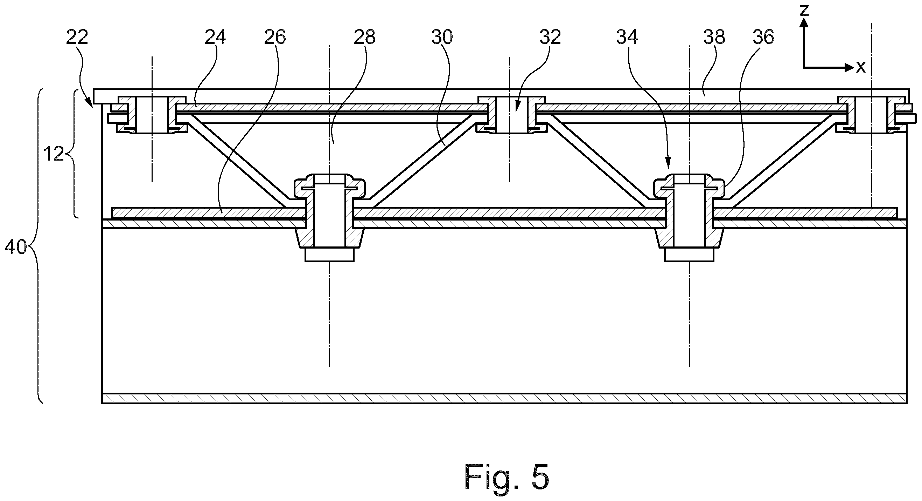

Fig. 5 shows a cross section of an example of the floor panel 12 with an attached support profile 14.

As an option, the floor panels 12 of the plurality of floor panels 12 are provided as sandwich panels 22 comprising a top layer 24 and a bottom layer 26 spaced apart by a center layer 28. The center layer 28 comprises a sheet-like structure 30 alternately fixed to the top layer 24 and the bottom layer 26 by a plurality of fixation points 32. At least a part of the fixation points 32 are provided as the interface points.

As an example, the fixation points 32 are provided for connecting the sheet-like structure 30 to the top layer 24 and the bottom layer 26. As an option, the fixation points 32 are provided as same points for top and bottom situation. As another option, the fixation points 32 are provided as different points for top and bottom situation, as shown in Fig. 5. As an example, the lower of the fixation points 32 are provided as connectors 36 for connection to the support profile 14.

As an option, the support profile 14 is provided as a profile vertically extending over the height of the floor panel 12. For better illustration, a first bracket indicates the floor panel 12 and a second bracket 40 indicates the support profile 14.

The top layer 24 is the side of the floor panel 12 that faces towards the cabin or cargo area in a mounted state. The bottom layer 26 is the side of the floor panel 12 that faces away from the cabin or cargo area in the mounted state.

In an example, a floor surface layer 38 is arranged on the top layer. The floor surface layer 38 may be provided as a carpet in case of a cabin floor. The floor surface layer 38 may be provided as a wearable surface in case of a cargo floor.

As an example, the sheet-like structure 30 is provided as a folded sheet, indicated in Fig. 5 as an option.

In a further option, the sheet-like structure 30 is provided as at least one of the group comprising: a corrugated sheet, a trapezoidal sheet, a troughed sheet and a profiled sheet.

Thus, the floor panels are provided as at least one of the group of:
- corrugated floor panels;
- trapezoidal floor panels; and
- profiled panels.

In an example, the corrugated floor panels oriented in Y-direction are replacing the cross beams and floor panels.

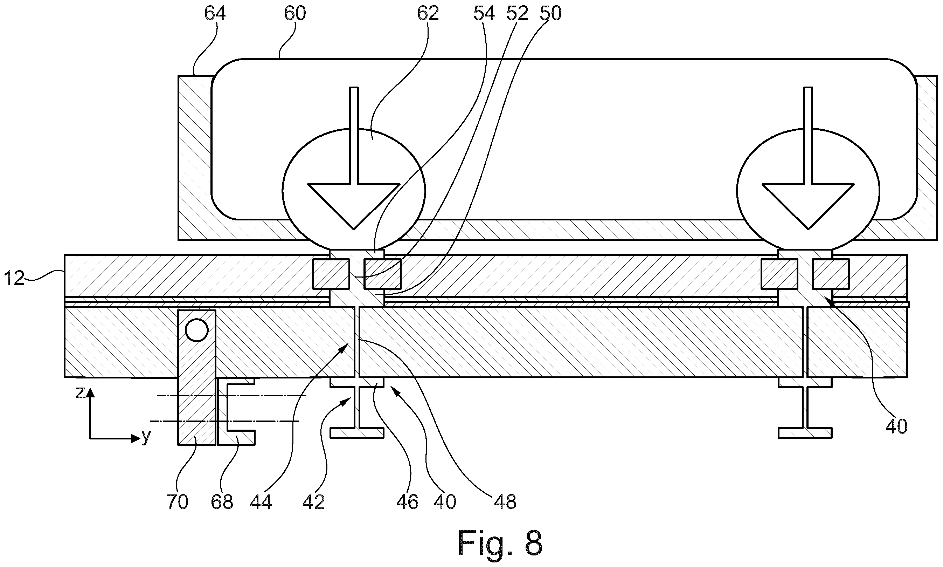

As can be seen also in combination with Fig. 8, the support profile 14 is provided as an integratable profile 41 comprising horizontal flange portions for mounting adjacent floor panels and vertical web members providing additional load support.

As an example, the integratable profile 41 comprises a lower profile part 42, e.g. with an I-beam cross-section. A middle profile part 44 is provided, e.g. also with an I-beam cross-section. The lower profile part 42 and the middle profile part 44 have common first horizontal flange portions. The middle profile part 44 comprises a vertical web member 48 that is followed by a further flange portion 50, and the vertical web member 48 continues as upper vertical web member 52. An upper flange segment 54 is further provided. The upper flange segment 54 can also be referred to as upper flange portion.

In an option, as shown in Fig. 8, the support profile 14 comprises the upper flange segment 54 configured to provide a local trolley support. For this purpose, a trolley 60 is indicated with its wheels 62. An arrow illustrates the weight force on the wheels 62 resting directly above the flange segment 54. Due to the local reinforcement, the additional weight forces can be compensated for.

As an example, the support profile14 is configured for creating a splice within the floor plane.

In an option, as also shown in Fig. 8, the support profile 14 comprises the upper segment 54 configured to provide a galley wall support. For this purpose, a galley wall 64 of the galley is schematically indicated. As an example, the galley wall 64 is resting in or on a wall mount 66, for example, fixing the wall to the floor.

In an option, not shown in detail, the floor supports 104 comprise longitudinal support profiles for resting the floor panels 12 on the support profiles.

In another option, also not shown in detail, the longitudinal support profiles are provided as seat rails resting on transverse cross beams 68. The panels 12 are resting on the seat rails.

The floor panels 12 can be reinforced by the at least one support profile 14 to provide additional load carrying capabilities when required.

In another option, the floor is a cabin floor with a cargo area below the cabin. The floor system is provided as gas-tight floor.

As an option, the floor system 100 with the at least one mountable support profile 14 provides a modular truss work.

The truss work of the floor system is provided as a system with modular reinforcability.

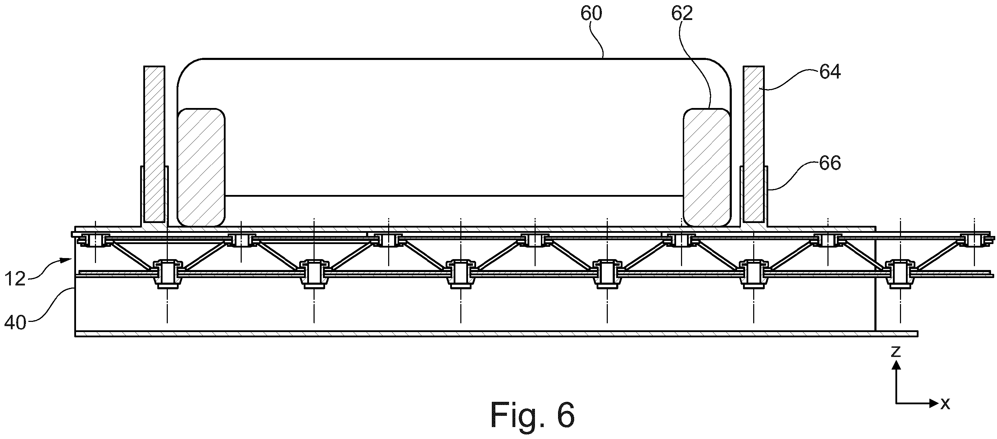

Fig. 6 shows the example of Fig. 5 in a larger view in the context of the trolley 60 and the galley wall 64 e.g. for providing additional support by the support profile 14.

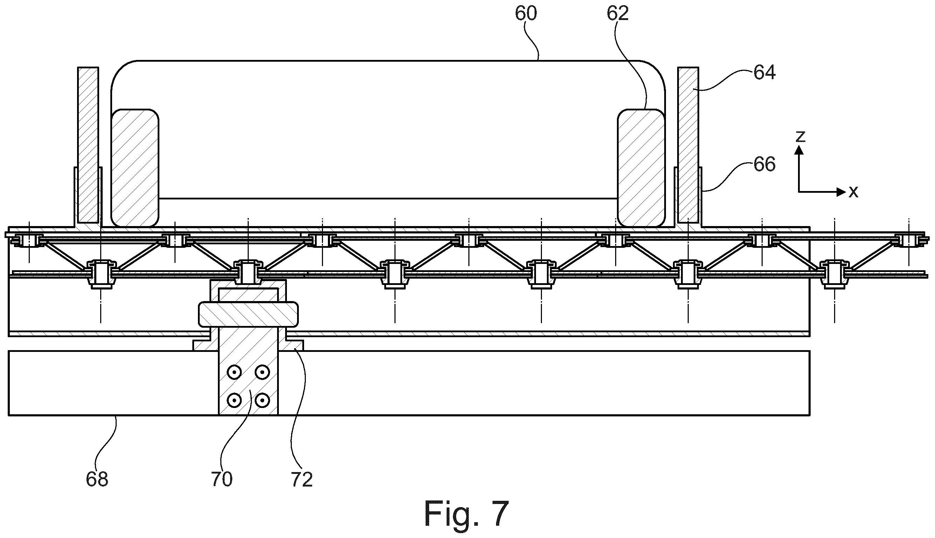

Fig. 7 shows the example of Fig. 6 with a mount to a cross beam 68. A bracket 70 provides a connection to the support profile 14. For example, Omega-shaped profiles 72 are provided for further support of the floor panels 12, e.g. also carrying a seat rail.

Fig. 8 shows the example pf Fig. 7 in a transverse cross-section.

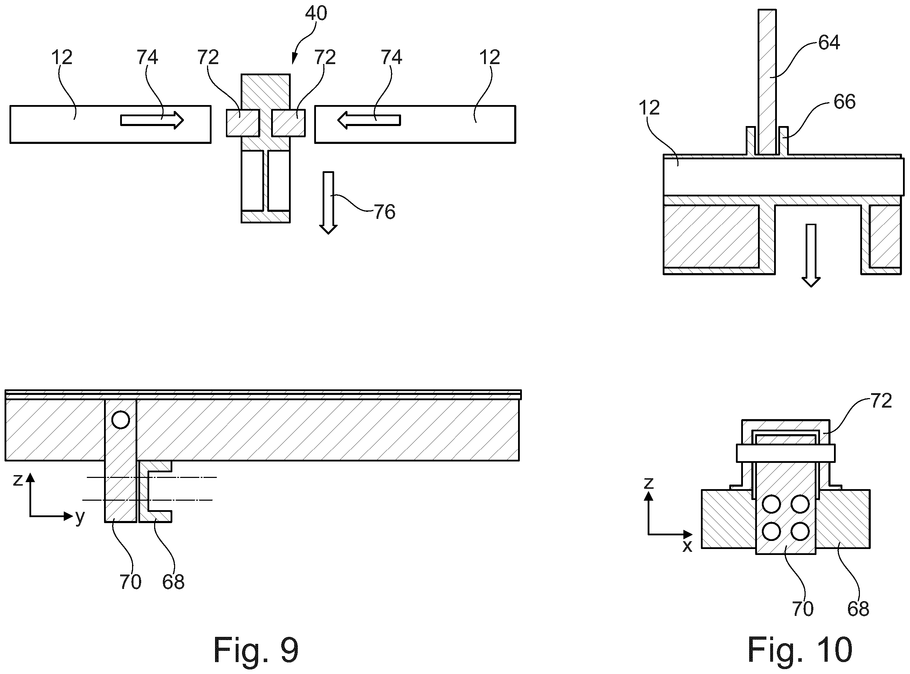

Fig. 9 schematically shows an example of a workflow for mounting the floor panel 12 and the support profile 14. The floor panels are moved towards the support profile 14, as indicated with first movement arrows 74. Brackets 75 are provided for connection, as well as the plurality of the interface points 16. The arrangement is then lowered onto a floor grid, e.g. comprising beam members fixed to the cross beams 68 by the holding brackets 70. The lowering is indicated with second movement arrow 76.

Fig. 10 schematically shows another example of a workflow for mounting the floor panel and the support profile in viewing direction transverse to the solution of Fig. 9.

Also, the following examples are provided:
a) An aircraft floor arrangement with customizable load-bearing capabilities is provided. The floor arrangement comprises a plurality of floor panels and at least one support profile. The at least one support profile is configured to reinforce at least one of the floor panels such that the load-bearing capabilities are increased. The floor panels are provided with a plurality of interface points arranged at least along one direction. The interface points are configured for mounting of one of the support profiles to one of the floor panels via the interface points to reinforce the floor panels.
b) The arrangement as in example a): The interface points are provided in a grid pattern.
c) Arrangement as in example a) or b): The support profile is configured for reinforcing the floor panel on i) below, ii) above or lateral.
d) Arrangement as in one of the examples a) to c): A plurality of different support profiles is provided forming a reinforcement kit. The support profiles are provided as i) lower reinforcement in different lengths and heights, ii) upper reinforcement in different lengths and widths, and/or iii) lateral reinforcement in different lengths and with different upper flange and web portions.
e) Arrangement as in one of the examples a) to d): The support profile is provided as an integratable profile comprising horizontal flange portions for mounting adjacent floor panels and vertical web members providing additional load support.
f) Arrangement as in one of the examples a) to e): The support profile comprises an upper flange segment configured to provide a local trolley support.
g) Arrangement as in one of the examples a) to f): The support profile comprises an upper segment configured to provide a galley wall support.
h) Arrangement as in one of the examples a) to g): The floor panels of the plurality of floor panels are provided as sandwich panels comprising a top layer and a bottom layer spaced apart by a center layer. The center layer comprises a sheet-like structure alternately fixed to the top layer and the bottom layer by a plurality of fixation points. At least a part of the fixation points are provided as the interface points.
i) Arrangement as in example h): The sheet-like structure is provided as a corrugated sheet, a folded sheet, a trapezoidal sheet, a troughed sheet and/or a profiled sheet.
j) Also a floor system for an aircraft is provided. The floor system comprises an aircraft floor arrangement according to one of the preceding examples and a support arrangement comprising a plurality of floor supports. The plurality of floor panels is carried by the floor supports.
k) System according to example j): The floor supports comprise longitudinal support profiles for resting the floor panels on the support profiles.
l) System according to example j) or k): The longitudinal support profiles are provided as seat rails resting on transverse cross beams. The panels are resting on the seat rails.
m) System according to example j), k) or l): The floor system with the at least one mountable support profile provides a modular truss work.
n) Also an aircraft is provided comprising a fuselage, a wing arrangement attached to the fuselage and a propulsion arrangement attached to at least one of the group of fuselage and wing arrangement. The floor is provided in the fuselage for a cabin or cargo area. The floor comprises at least one aircraft floor arrangement according to one of the examples a) to i) or a floor system for an aircraft cabin according to one of the examples j) to m).
o) Also a method for customizing load-bearing capabilities of an aircraft floor arrangement is provided that comprises the following steps: providing a plurality of floor panels provided with a plurality of interface points arranged at least along one direction, and providing at least one support profile configured to reinforce at least one of the floor panels such that the load-bearing capabilities are increased; and mounting of one of the support profiles to one of the floor panels via the interface points to reinforce the floor panels.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An aircraft floor arrangement (10) with customizable load-bearing capabilities, comprising:
- a plurality of floor panels (12); and
- at least one support profile (14);
wherein the at least one support profile is configured to reinforce at least one of the floor panels such that the load-bearing capabilities are increased;
wherein the floor panels are provided with a plurality of interface points (16) arranged at least along one direction; and
wherein the interface points are configured for mounting of one of the support profiles to one of the floor panels via the interface points to reinforce the floor panels.

2. Arrangement according to claim 1, wherein the floor panels of the plurality of floor panels are provided as sandwich panels comprising a top layer (24) and a bottom layer (26) spaced apart by a center layer (28); and
wherein the center layer comprises a sheet-like structure (30) alternately fixed to the top layer and the bottom layer by a plurality of fixation points (32); and
wherein at least a part of the fixation points are provided as the interface points.

3. Arrangement according to claim 2, wherein the sheet-like structure is provided as at least one of the group comprising:
i) a corrugated sheet;
ii) a folded sheet;
iii) a trapezoidal sheet;
iv) a troughed sheet; and
v) a profiled sheet.

4. Arrangement according to one of the preceding claims, wherein the interface points are provided in a grid pattern.

5. Arrangement according to one of the preceding claims, wherein the support profile is configured for reinforcing the floor panel on at least one of the group of:
i) below;
ii) above; and
iii) lateral.

6. Arrangement according to one of the preceding claims, wherein a plurality of different support profiles is provided forming a reinforcement kit, the support profiles being provided as at least one of the group of:
i) lower reinforcement in different lengths and heights;
ii) upper reinforcement in different lengths and widths; and
iii) lateral reinforcement in different lengths and with different upper flange and web portions.

7. Arrangement according to one of the preceding claims, wherein the support profile is provided as an integratable profile (41) comprising horizontal flange portions (50, 54) for mounting adjacent floor panels and vertical web members (48, 52) providing additional load support.

8. Arrangement according to one of the preceding claims, wherein the support profile comprises an upper flange segment (54) configured to provide a local trolley support.

9. Arrangement according to one of the preceding claims, wherein the support profile comprises an upper segment (54) configured to provide a galley wall support.

10. An aircraft (200) comprising:
- a fuselage (202);
- a wing arrangement (204) attached to the fuselage; and
- a propulsion arrangement (206) attached to at least one of the group of fuselage and wing arrangement;
wherein a floor (208) is provided in the fuselage for a cabin or cargo area; and
wherein the floor comprises at least one aircraft floor arrangement (10) according to one of the claims 1 to 9.

11. A method (300) for customizing load-bearing capabilities of an aircraft floor arrangement, comprising the following steps:
- providing (302) a plurality of floor panels provided with a plurality of interface points arranged at least along one direction, and
- providing (304) at least one support profile configured to reinforce at least one of the floor panels such that the load-bearing capabilities are increased; and
- mounting (306) of one of the support profiles to one of the floor panels via the interface points to reinforce the floor panels.
